# EUROPÄISCHE PATENTSCHRIFT

(11) **EP 0 831 344 B1**
(45) Veröffentlichungstag und Bekanntmachung des Hinweises auf die Patenterteilung: **26.02.2003**
(21) Anmeldenummer: 97114075.1
(22) Anmeldetag: 14.08.1997
(51) Int. Cl.: G02B 6/12

(54) **Anordnung aus zwei auf der Oberfläche eines Substrates integrierten optischen Wellenleitern**
Arrangement of two integrated optics lightguides on the upper surface of a substrate
Arrangement de deux guides d'ondes en optique integré à la surface d'un substrat

(30) Priorität: 20.09.1996 DE 19638649
(43) Veröffentlichungstag der Anmeldung: 25.03.1998
(73) Patentinhaber: Infineon Technologies AG, 81669 München (DE)
(72) Erfinder: Schienle, Meinrad, 81735 München (DE); Heinbach,Matthias, 81543 München (DE); Acklin, Bruno, 93059 Regensburg (DE); Müller, Gustav, 93059 Regensburg (DE)
(74) Vertreter: Müller, Wolfram Hubertus, Dr. Dipl.-Phys.

(56) Entgegenhaltungen:
- EP-A- 0 645 649
- US-A- 5 078 516
- LADOUCEUR F ET AL: "A NEW GENERAL APPROACH TO OPTICAL WAVEGUIDE PATH DESIGN" JOURNAL OF LIGHTWAVE TECHNOLOGY,US,IEEE. NEW YORK, Bd. 13, Nr. 3, 1. März 1995 (1995-03-01), Seiten 481-492, XP000509315 ISSN: 0733-8724
- PATENT ABSTRACTS OF JAPAN vol. 015, no. 469 (P-1281), 27. November 1991 (1991-11-27) & JP 03 200904 A (NEC CORP), 2. September 1991 (1991-09-02)
- SPIEKMAN L H ET AL: "ULTRASMALL WAVEGUIDE BENDS: THE CORNER MIRRORS OF THE FUTURE?" IEE PROCEEDINGS: OPTOELECTRONICS,GB,INSTITUTION OF ELECTRICAL ENGINEERS, STEVENAGE, Bd. 142, Nr. 1, 1. Februar 1995 (1995-02-01), Seiten 61-65, XP000513666 ISSN: 1350-2433

## Beschreibung

Die Erfindung betrifft eine Anordnung aus zwei auf der Oberfläche eines Substrats integrierten optischen Wellenleitern nach dem Oberbegriff des Patentanspruchs 1.

Bei integriert optischen Schaltungen werden abhängig von ihrer Funktion verschiedene Anforderungen an die verwendeten Wellenleiter gestellt: Passive Elemente wie Filter oder Schalter basieren in der Regel auf Strukturen aus verkoppelten Wellenleitern, die zur Erzielung von kompakten Abmessungen eine schwache Wellenführung erfordern. Für gekrümmte optische Verbindungswellenleiter ist zur Realisierung enger Krümmungsradien wegen der auftretenden Abstrahlung eine starke Wellenführung nötig.

Es ist möglich, für alle Subkomponenten einen Wellenleitertyp zu verwenden, wobei die Wellenführung so eingestellt wird, daß alle Anforderungen in zufriedenstellendem Maß erfüllt werden. Die nach diesem Kompromiß entworfenen Strukturen sind lang und schmal. Die Baulänge der Chips ist relativ groß.

In der EP-A-0 285 351 ist eine Anordnung aus einem auf der Oberfläche eines Substrats integriertem, streckenweise gerade und streckenweise gekrümmt verlaufenden optischen Wellenleiters bekannt, bei der durch an der Außenseite eines gekrümmten Wellenleiters angeordnete Gräben Strahlungsverluste des Wellenleiters reduziert werden.

Aus Journal of Lightwave Technology 7, (1989), Nr. 7, Seiten 1066-1022 geht hervor, wie bei einem gekrümmten Wellenleiter der Kurvenverlauf bezüglich der Strahlungsverluste optimiert werden kann.

Im Journal of Lightware Technology 13 (1995), Nr. 3, Seiten 481 bis 492 sind Wellenleiter beschrieben, die aus kurvenförmigen und geraden Segmenten zusammengesetzt sind. Die kurvenförmigen Segmente sind breiter als die geraden, um Verluste aufgrund der Krümmung auszugleichen.

In der JP-A-03200904 ist ein optischer Wellenleiter beschrieben, der aus einem geraden und einem kurvenförmigen Segment zusammengesetzt ist. Der Wellenleiter ist als Rippenwellenleiter ausgebildet, wobei die Rippenhöhe in dem kurvenförmigen Segment größer ist, als in dem geraden Segment.

In der EP-A2-0645649 ist ein streifenförmiger integriert optischer Wellenleiter mit zwischen den Enden des Wellenleiters gekrümmt verlaufender Längsachse beschrieben.

Bei der im Anspruch 1 angegebenen erfindungsgemäßen Anordnung sind vorteilhafterweise beide Wellenleitertypen, der stark und der schwach führende, auf einem gemeinsamen Substrat sowie deren verlustarme Kopplung realisiert, wobei zudem der Vorteil kompakter Abmessungen der Anordnung gegeben ist.

Bevorzugte und vorteilhafte Ausgestaltungen der erfindungsgemäßen Anordnung gehen aus den Unteransprüchen hervor.

Die Erfindung wird in der nachfolgenden Beschreibung anhand der Figuren beispielhaft näher erläutert. Es zeigen:
- Figur 1: in perspektivischer schematischer Darstellung ein Ausführungsbeispiel einer erfindungsgemäßen Anordnung und
- Figur 2: in einem Diagramm eine beispielhafte Änderung des Krümmungsradius in Richtung vom schwächer führenden Wellenleiter fort.

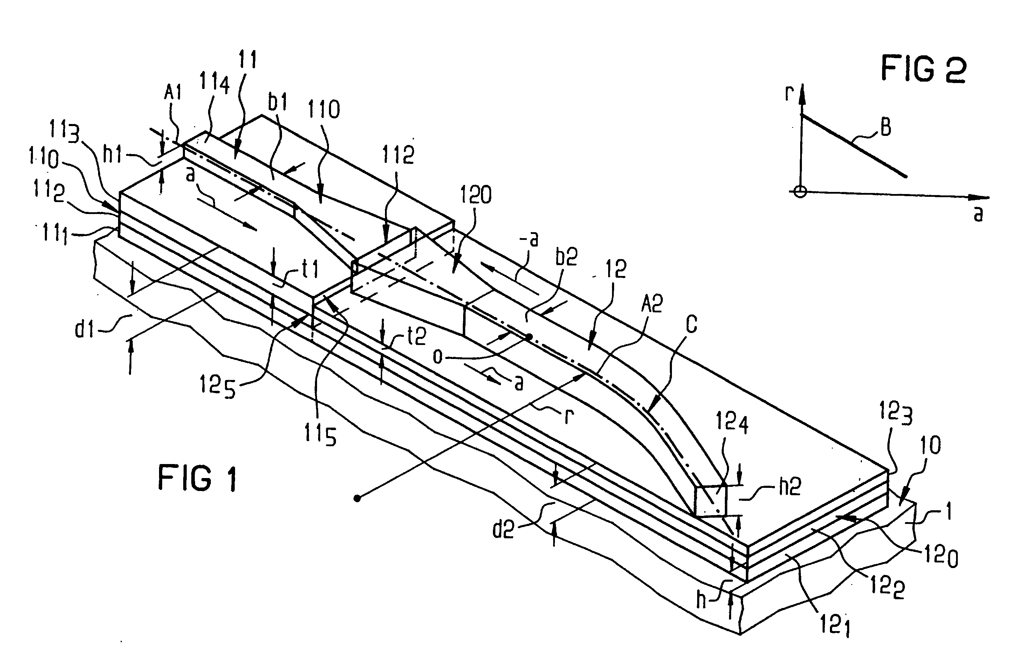

Gemäß Figur 1 sind auf der Oberfläche 10 eines Substrats 1 ein Wellenleiter 11 mit einer Achse A1 und ein Wellenleiter 12 mit einer Achse A2 ausgebildet. Die beiden Wellenleiter 11 und 12 koaxial hintereinander angeordnet und optisch aneinandergekoppelt, so daß die in einem Wellenleiter 11 oder 12 geführte Welle in den anderen Wellenleiter 12 bzw. 11 überkoppeln kann.

Einer der beiden Wellenleiter 11 und 12, beispielsweise der Wellenleiter 11, führt die optische Welle relativ schwächer, der andere, im Beispiel der Wellenleiter 12, die optische Welle relativ stärker.

Die Achse A1 des schwächer führenden Wellenleiters 11 ist im wesentlichen gerade und die Achse A2 des stärker führenden Wellenleiters 12 weist eine Krümmung C mit einem sich entlang dieser Achse A2 ändernden Krümmungsradius r auf.

Die beiden Wellenleiter 11 und 12 sind generell streifenartige Wellenleiter, d.h. Wellenleiter, die eine zur Oberfläche des Substrats parallele und zur Achse senkrechte definierte Breite aufweisen, innerhalb der eine optische Welle im Wellenleiter längs der Achse geführt wird. Ein Beispiel für einen streifenartigen Wellenleiter ist ein Rippenwellenleiter.

Ein Rippenwellenleiter besteht beispielsweise (siehe DE 40 30 756 A1 (GR 90 P 1727 DE)) aus einem flächig ausgedehnten Schichtwellenleiter, auf dem eine längs einer Achse geführte Rippe vorbestimmter Breite ausgebildet ist. Eine im Bereich der Rippe in den Schichtwellenleiter eingekoppelte optische Welle verläuft längs der Achse der Rippe und bleibt im wesentlichen auf einen durch die Breite der Rippe definierten schmalen Bereich unterhalb der Rippe beschränkt. Die Achse der Rippe definiert die Achse des Rippenwellenleiters, längs der sich die in ihm geführte optische Welle ausbreitet, und die Breite der Rippe die Breite des Rippenwellenleiters.

Beim Beispiel nach Figur 1 sind speziell sowohl der schwächer führende Wellenleiter 11 als auch der stärker führende Wellenleiter 12 jeweils als Rippenwellenleiter ausgebildet.

Bei diesem Beispiel besteht der auf der ebenen Oberfläche 10 des Substrats 1 angeordnete Schichtwellenleiter 11₀ des schwächer führenden Rippenwellenleiters 11 aus den Schichten 11₁, 11₂ und 11₃. Die Rippe 11₄ dieses Wellenleiters 11 ist auf der obersten Schicht 11₃ des Schichtwellenleiters 11₀ ausgebildet und ersterckt sich längs der geraden Achse A1.

Der auf der Oberfläche 10 des Substrats 1 angeordnete Schichtwellenleiter 12₀ des stärker führenden Rippenwellenleiters 12 besteht aus den Schichten 12₁, 12₂ und 12₃. Die Rippe 12₄ dieses Wellenleiters 12 ist auf der obersten Schicht 12₃ des Schichtwellenleiters 12₀ ausgebildetund erstreckt sich längs der Achse A2.

Die Schichten 11₁ und 11₃ des Schichtwellenleiters 11₀ sind Mantelschichten, die zwischen diesen Mantelschichten 11₁, 11₃ angeordnete Schicht 11₂ des Schichtwellenleiters 11₀ ist eine Kernschicht, die im Vergleich zu den Mantelschichten 11₁ und 11₃ eine höhere Brechzahl aufweist und in der die im Rippenwellenleiter 11 längs der Achse A1 der Rippe 11₄ geführte optische Welle im wesentlichen geführt wird.

Ebenso sind die Schichten 12₁ und 12₃ des Schichtwellenleiters 12₀ Mantelschichten, die zwischen diesen Mantelschichten 12₁, 12₃ angeordnete Schicht 12₂ des Schichtwellenleiters 12₀ ist eine Kernschicht, die im Vergleich zu den Mantelschichten 12₁ und 12₃ eine höhere Brechzahl aufweist und in der eine im Rippenwellenleiter 12 längs der Achse A2 der Rippe 11₄ geführte optische Welle im wesentlichen geführt wird.

Die verschieden starke Wellenführung der Wellenleiters 11 und 12 kann im Fall ihrer Ausbildung als Rippenwellenleiter beispielsweise dadurch erreicht werden, daß Dicke der Kernschicht und/oder die Dicke wenigstens einer Mantelschicht und/oder die Höhe der Rippen und/oder die Brechzahldifferenz zwischen den Kern- und Mantelschichten beider Rippenwellenleiter 11 und 12 derart verschieden voneinander gewählt werden, daß
- die Dicke d2 der Kernschicht 12₂ des relativ stärker führenden Rippenwellenleiters 12 größer als Dicke d1 der Kernschicht 11₂ des relativ schwächer führenden Rippenwellenleiters 11 und/oder
- die Dicke t2 der Mantelschicht 12₁ und/oder 12₃ des Wellenleiters 12 kleiner als Dicke t1 der Mantelschicht 11₁ bzw. 11₃ des Wellenleiters 11 und/oder
- die Höhe h2 der Rippe 12₄ des Wellenleiters 12 größer als die Höhe h1 der Rippe 11₄ des Wellenleiters 11 und/oder
- die Brechzahldifferenz zwischen der Kernschicht 12₂ und den Mantelschichten 12₁ und 12₃ des Wellenleiters 12 größer als die Brechzahldifferenz zwischen der Kernschicht 11₂ und den Mantelschichten 11₁ und 11₃ des Wellenleiters 11 ist.

Bei dem in Figur 1 dargestellten Beispiel ist es beispielsweise so eingerichtet, daß sich die beiden Schichtwellenleiter 11₀ und 12₀ der beiden Wellenleiter 11 und 12 nur in der auf der jeweiligen Kernschicht 11₂ bzw. 12₂ angeordneten Mantelschicht 11₃ und 12₃ voneinander unterscheiden, derart, daß die Dicke t2 der Mantelschicht 12₃ kleiner als die Dicke t1 der Mantelschicht 11₃ ist und die Höhe h2 der Rippe 12₄ des Wellenleiters 12 um die Dickendifferenz t1-t2 größer als die Höhe h1 der Rippe 11₄ des Wellenleiters 11 ist.

Generell können die Breiten der Wellenleiter 11 und 12, die beim Beispiel nach Figur 1 speziell durch die Breiten b1 und b2 der Rippen 11₄ und 12₄ bestimmt sind, vorteilhafterweise voneinander unabhängig für ihre jeweilige Funktion optimal gewählt werden und sind daher im allgemeinen unterschiedlich.

Der Krümmungsradius r der Achse A2 des stärker führenden Wellenleiters 12 ändert sich so, daß er in einer vom schwächer führenden Wellenleiter 11 fort weisenden Richtung a eine kontinuierliche Abnahme B aufweist, die linear ist, so wie es in der Figur 2 dargestellt ist. In der Figur 2 ist der Krümmungsradius r in Abhängigkeit vom Abstand von einem Punkt 0 auf der Achse A2 in der vom Wellenleiter 11 fort weisenden Richtung a aufgetragen.

Die beiden Wellenleiter 11 und 12 sind vorzugsweise durch Stoßkopplung optisch aneinander gekoppelt, d.h. die beiden Wellenleiter weisen einander unmittelbar gegenüberliegende Stirnflächen 11₅ bzw. 12₅ auf, die wegen der koaxialen Anordnung der beiden Wellenleiter 11 und 12 zentrisch zueinander angeordnet sind. Diese zentrische Anordnung hat den Vorteil, daß herstellungsbedingte Schwankungen der Breite der Wellenleiter 11 und 12 die Überkopplung einer geführten Welle von einem Wellenleiter in den anderen kaum beeinträchtigen.

Beim Beispiel nach Figur 1 ist die Stoßkopplung vorteilhafterweise dadurch realisiert, daß die Schichtwellenleiter 11₀ und 12₀ der beiden Rippenwellenleiter 11 und 12 aneinandergrenzende Anschnitte eines beiden Wellenleitern 11 und 12 gemeinsam zugeordneten einzigen Schichtwellenleiters sind, dessen Kernschicht sich über beide Wellenleiter 11 und 12 erstreckt. Die Stelle, an der die beiden Abschnitte 11₀ und 12₀ aneinandergrenzen, ist durch eine Stufe gegeben, bei der die dickere Mantelschicht 11₃ in die dünnere Mantelschicht 12₃ übergeht und welche die einander gegenüberliegenden Stirnflächen 11₅ und 12₅ dieser Abschnitte 11₀ und 12₀ markieren. Wegen des einzigen Schichtwellenleiters sind die Stirnflächen 11₅ und 12₅ nicht wirklich vorhandene gedachte Stirnflächen.

Die Stoßkopplung ermöglicht eine verlustarme und polarisationsunabhängige Überkopplung der optischen Welle von einem in den anderen Wellenleiter.

Vorteilhaft ist es dabei, wenn der relativ stärker führende Wellenleiter 12 einen dem relativ schwächer führenden Wellenleiter 11 gegenüberliegenden taperförmigen Endabschnitt 120 aufweist, der sich in Richtung -a zum schwächer führenden Wellenleiter 11 erweitert und/oder wenn der relativ schwächer führende Wellenleiter 11 einen dem relativ stärker führenden Wellenleiter 12 gegenüberliegenden taperförmigen Endabschnitt 110 aufweist, der sich in Richtung a zum stärker führenden Wellenleiter 12 erweitert.

Bevorzugterweise verbreitert sich der taperförmige Endabschnitt 120 des relativ stärker führenden Wellenleiters 12 parallel zur Oberfläche 10 des Substrats 1. Ebenso verbreitert sich bevorzugterweise der taperförmige Endabschnitt 110 des schwächer führenden Wellenleiters 11 parallel zur Oberfläche 10 des Substrats 1.

Beim Beispiel nach Figur 1 weisen beide Wellenleiter 11 und 12 je einen taperförmigen Endabschnitt 110 bzw. 120 auf, der sich parallel zur Oberfläche 10 des Substrats 1 verbreitert und durch eine Verbreiterung der Rippe 11₄ bzw. 12₄ dieses Wellenleiters 11 bzw. 12 definiert ist.

## Patentansprüche

1. Anordnung aus zumindest zwei auf der Oberfläche (10) eines Substrats (1) integrierten optischen Wellenleitern (11, 12) zum jeweiligen Führen einer optischen Welle längs je einer Achse (A1, A2),
wobei
- die beiden Wellenleiter (11, 12) koaxial hintereinander angeordnet und optisch aneinandergekoppelt sind, so daß die in einem Wellenleiter (11, 12) geführte Welle in den anderen Wellenleiter (12, 11) überkoppelt,
- einer (11) der beiden Wellenleiter (11, 12) die optische Welle relativ schwächer, der andere (12) relativ stärker führt,
- die Achse (A1) des schwächer führenden Wellenleiters (11) im wesentlichen gerade ist, und
- die Achse (A2) des stärker führenden Wellenleiters (12) eine Krümmung (C) mit einem sich entlang dieser Achse (A2) ändernden Krümmungsradius (r) aufweist,
**dadurch gekennzeichnet daß** der Krümmungsradius (r) in Richtung (a) vom schwächer führenden Wellenleiter (11) fort eine linear kontinuierliche Abnahme (B) aufweist.

2. Anordnung nach Anspruch 1,
**dadurch gekennzeichnet, daß**
die beiden Wellenleiter (11, 12) durch Stoßkopplung (112) aneinander gekoppelt sind.

3. Anordnung nach Anspruch 1 oder 2
**dadurch gekennzeichnet, daß**
der stärker führende Wellenleiter (12) einen dem schwächer führenden Wellenleiter (11) gegenüberliegenden taperförmigen Endabschnitt (120) aufweist, der sich in Richtung (-a) zum schwächer führenden Wellenleiter (11) erweitert.

4. Anordnung nach einem der vorhergehenden Ansprüche, insbesondere nach Anspruch 3,
**dadurch gekennzeichnet, daß**
der schwächer führende Wellenleiter (11) einen dem stärker führenden Wellenleiter (12) gegenüberliegenden taperförmigen Endabschnitt aufweist, der sich in Richtung (a) zumstärker führenden Wellenleiter erweitert.

5. Anordnung nach Anspruch 3,
**dadurch gekennzeichnet, daß**
sich der taperförmige Endabschnitt (120) des stärker führenden Wellenleiters (12) parallel zur Oberfläche (10) des Substrats (1) verbreitert.

6. Anordnung nach Anspruch 4 oder 5, insbesondere nach Anspruch 5,
**dadurch gekennzeichnet, daß**
das sich der taperförmige Endabschnitt (110) des schwächer führenden Wellenleiters (11) parallel zur Oberfläche (10) des Substrats (1) verbreitert.

7. Anordnung nach einem der vorhergehenden Ansprüche,
**dadurch gekennzeichnet, daß**
der stärker und/oder schwächer führende Wellenleiter (12, 11) ein Rippenwellenleiter ist.

## Claims

1. Arrangement composed of at least two optical waveguides (11, 12) integrated on the surface (10) of a substrate (1), for the purpose of respectively guiding an optical wave along one axis (A1, A2) each,
- the two waveguides (11, 12) being arranged coaxially one behind another and being optically coupled to one another such that the wave guided in one waveguide (11, 12) is transferred into the other waveguide (12, 11),
- one (11) of the two waveguides (11, 12) guiding the optical wave relatively more weakly, and the other (12) guiding it relatively more strongly,
- the axis (A1) of the more weakly guiding waveguide (11) being substantially straight, and
- the axis (A2) of the more strongly guiding waveguide (12) having a curvature (C) with a radius of curvature (r) changing along this axis (A2),
**characterized in that** the radius of curvature (r) has a linearly continuous reduction (B) in the direction (a) away from the more weakly guiding waveguide (11).

2. Arrangement according to Claim 1, **characterized in that** the two waveguides (11, 12) are coupled to one another by butt coupling (112).

3. Arrangement according to Claim 1 or 2, **characterized in that** opposite the more weakly guiding waveguide (11) the more strongly guiding waveguide (12) has a tapered end section (120) which widens in the direction (-a) to the more weakly guiding waveguide (11).

4. Arrangement according to one of the preceding claims, in particular according to Claim 3, **characterized in that** opposite the more strongly guiding waveguide (12) the more weakly guiding waveguide (11) has a tapered end section which widens in the direction (a) of the more strongly guiding waveguide.

5. Arrangement according to Claim 3, **characterized in that** the tapered end section (120) of the more strongly guiding waveguide (12) widens parallel to the surface (10) of the substrate (1).

6. Arrangement according to Claim 4 or 5, in particular according to Claim 5, **characterized in that** the tapered end section (110) of the more weakly guiding waveguide (11) widens parallel to the surface (10) of the substrate (1).

7. Arrangement according to one of the preceding claims, **characterized in that** the more strongly and/or more weakly guiding waveguide (12, 11) is a rib waveguide.

## Revendications

1. Arrangement de deux guides d'ondes optiques (11, 12) intégrés à la surface (10) d'un substrat (1) et destinés à guider chacun une onde optique le long d'un axe (A1, A2) respectif, dans lequel
- les deux guides d'ondes optiques (11, 12) sont disposés coaxialement l'un à la suite de l'autre et sont couplés mutuellement sur le plan optique, de sorte que l'onde guidée dans un guide d'ondes (11, 12) transite dans l'autre guide d'ondes (12, 11),
- l'un (11) des deux guides d'ondes (11, 12) guide l'onde optique de manière relativement plus faible, et l'autre (12) de manière relativement plus forte,
- l'axe (A1) du guide d'ondes (11) guidant plus faiblement est sensiblement rectiligne, et
- l'axe (A2) du guide d'ondes (12) guidant plus fortement présente une courbure (C) avec un rayon de courbure (r) variant le long de cet axe (A2),
**caractérisé en ce que** le rayon de courbure (r) présente dans la direction (a) s'éloignant du guide d'ondes (11) guidant plus faiblement, une diminution (B) linéaire, continuelle.

2. Arrangement selon la revendication 1, **caractérisé en ce que** les deux guides d'ondes (11, 12) sont couplés l'un à l'autre par un couplage jointif bout à bout (112).

3. Arrangement selon la revendication 1 ou 2, **caractérisé en ce que** le guide d'ondes (12) guidant plus fortement présente en regard du guide d'ondes (11) guidant plus faiblement, un tronçon d'extrémité (120) de forme effilée, qui s'élargit dans la direction (-a) vers le guide d'ondes (11) guidant plus faiblement.

4. Arrangement selon l'une des revendications précédentes, notamment la revendication 3, **caractérisé en ce que** le guide d'ondes (11) guidant plus faiblement présente en regard du guide d'ondes (12) guidant plus fortement, un tronçon d'extrémité de forme effilée, qui s'élargit dans la direction (a) vers le guide d'ondes guidant plus fortement.

5. Arrangement selon la revendication 3, **caractérisé en ce que** le tronçon d'extrémité (120) de forme effilée du guide d'ondes (12) guidant plus fortement, s'élargit parallèlement à la surface (10) du substrat (1).

6. Arrangement selon la revendication 4 ou 5, **caractérisé en ce que** le tronçon d'extrémité (110) de forme effilée du guide d'ondes (11) guidant plus faiblement, s'élargit parallèlement à la surface (10) du substrat (1).

7. Arrangement selon l'une des revendications précédentes, **caractérisé en ce que** le guide d'ondes guidant plus fortement et/ou guidant plus faiblement (12, 11), est un guide d'ondes à nervure.
